# EUROPEAN PATENT SPECIFICATION

(11) **EP 0 806 146 B1**
(45) Date of publication and mention of the grant of the patent: **30.01.2002**
(21) Application number: 97201118.3
(22) Date of filing: 15.04.1997
(51) Int. Cl.: A23D 9/00, C11C 3/10, C11B 7/00, A23L 1/01

(54) **Frying fat**
Back- und Bratfett
Matière grasse de friture

(30) Priority: 08.05.1996 EP 96201258
(43) Date of publication of application: 12.11.1997
(73) Proprietor: UNILEVER N.V., 3000 DK Rotterdam (NL); UNILEVER PLC, London EC4P 4BQ (GB)
(72) Inventor: Iburg, Jan Eric, c/o Unilever Research, 3133 AT Vlaardingen (NL); van den Oever, Christiaan Evert, Unilever Research, 3133 AT Vlaardingen (NL)
(74) Representative: Sikken, Antonius H. J. M.

(56) References cited:
- EP-A- 0 045 504
- EP-A- 0 070 050
- EP-A- 0 129 293
- EP-A- 0 651 046
- WO-A-91/12304
- US-A- 4 288 378
- US-A- 5 196 215
- DATABASE WPI Week 9522 Derwent Publications Ltd., London, GB; AN 95-166325 XP002014126 & JP 07 087 904 A (KAO CORP) , 4 April 1995

## Description

The invention relates to a frying fat suitable for frying food products that are to be consumed cold, to a process for preparing such frying fat, to a process for preparing fried food product and to the fried food product obtained.

Some fried food products are typically consumed after they have been allowed to cool down after frying, e.g. donuts and "Berliner", other fried food products can be consumed either while hot or after cooling, e.g. "oliebollen", "appelflappen", some fried vegetables etc. For satisfactory results, the frying fat used for preparing fried food products which are to be consumed cold, has to meet requirements, in addition to requirements generally applicable for frying fat. For such application especially groundnut oil hydrogenated to a slip melting point of about 35°C optionally blended with some liquid groundnut oil gives very satisfactory results from a sensoric point of view. It also has a long frying life, which is an important consideration for the manufacturer of the fried food products. For these reasons, such partially hydrogenated groundnut oil, although expensive, is often the preferred frying fat for preparing fried food products which are to be eaten cold.

A disadvantage of the partially hydrogenated groundnut oil currently employed is that it contains trans unsaturated fatty acid residues. These were found to have an adverse effect on blood cholesterol levels, similar to saturated fatty acids. The problem we therefore set out to solve was to provide a frying fat suitable for frying food products that are to be consumed "cold", e.g. at ambient temperature, that is as good as the currently employed partially hydrogenated groundnut oil but that does not contain significant amounts of trans unsaturated fatty acid residues. We have found that this objective can be met.

Accordingly, the invention provides a frying fat suitable for frying food products that are to be consumed cold, which frying fat
* is substantially free of trans unsaturated fatty acid residues
* includes 0-6% preferably 0-5%, more preferably 1-4% S₃ triglycerides wherein S indicates saturated fatty acid residues with 16-24, preferably 18-22 C-atoms
* includes at least 20% S₂O triglycerides wherein O indicates oleic acid residue and wherein S as defined above
* has a N₂₀-N₃₅ value of at least 25.

Very useful frying fats, display a weight ratio S0S-SS0 triglycerides of less than 10, preferably less than 5.0, more preferably less than 2.0, most preferably less than 1.0. Further our preferred fats have C_{18:0} - contents of more than 35 wt%, preferably more than 50 wt%.

Preferred embodiments of the frying fat are given in claims 2-8. The invention also provides a process for preparing the present frying fat, which process comprises
* preparing an interesterified mixture of
   - liquid oil
   - fully hardened liquid oil, and
   - optionally a stearin fraction of an interesterified mixture derived from liquid oil, which fraction may have been fully hydrogenated,
   such that the interesterified mixture
   - is substantially free of trans unsaturated fatty acid residues,
   - contains at most 30% preferably at most 27% S₃ triglycerides
   - contains at least 15% S₂O triglycerides
* separating the interesterified mixture into an olein fraction and a stearin fraction such that at least 45% of olein fraction is recovered, and
* optionally blending 80-100% of the olein fraction with 0-20% of liquid oil.

In this process the liquid oil and fully hardened liquid oil are mixed in weight-ratios of 1:3 to 3:1, preferably 1:2 to 2:1, most preferably 1:1.5 to 1.5:1.
The optionally used stearin fraction can be used in amounts of 0-60 wt% (based on the total liquid oil and hardened liquid oil).

A preferred embodiment of the process is given in claim 11.

An advantage of the present frying fat compared to the prior art product in addition to being substantially transfree, is that it can have a higher content of cis-unsaturated fatty acid residues, which is attractive from a nutritional point of view.

We found that by ensuring that the content of S₃ triglycerides is at most 6%, that the content of S₂O triglycerides is at least 20% and that N₂₀-N₃₅ is at least 25, a frying fat is obtained that gives very good results in frying. The fried product is relatively dry and not oily, which looks attractive and prevents the hands from becoming excessively greasy when eating the product. Also the mouthfeel and taste of the product is very good, which we believe relates to the S₃ content of the frying fat. We found it preferable for the S₃ content to be 0-5%, especially 1-4%. Optimal results were obtained with an S₂O content of 23-45%, especially 25-40%. The balance of the fat typically contains mainly S₂U triglycerides other than S₂O, SU₂ and U₃ triglycerides, although some minor amounts of other components will usually be present in the fat, e.g. tocopherols, mono- and diglycerides, pigments, etc. However such non-triglyceride components preferably do not constitute more than 5% of the fat, while more preferably it is about 2% or less. U indicates unsaturated fatty acid residues. The difference between N₂₀ and N₃₅ preferably is 27-50, especially 30-45. The N₂₀ value itself preferably is 25-50, more preferably 30-47, especially 33-45. N₃₅ is preferably 0-3, more preferably 0-2 and ideally less than 1.

For nutritional reasons as well as for a good frying life of the frying fat, i.e. the length of time or the number of frying operations the fat can be used, we found it preferable for at least 75%, more preferably 80-100%, of the fatty acid residues to have a chain length of 18 carbon atoms. Such fatty acid residues include stearic, oleic, linoleic and linolenic fatty acid residues. For a good frying life, the content of linolenic acid residues plus any other 3 or higher fold unsaturated fatty acid residues however is preferably low, e.g. 0-4%, more preferably 0-3%, especially 0-2%. Furthermore, for a good frying life we found it desirable for the content of relatively short fatty acids, containing 14 or less carton atoms in the chain, to be low, preferably 5% or less. In particular the content of fatty acids with 12 or less carbon atoms in the chain is preferably 0-3%, more preferably 0-1%. On the other hand, relatively high contents of oleic acid residues contribute to obtaining good results. Preferably the unsaturated fatty acid residues of the frying fat comprise at least 40%, more preferably 50-98% of oleic acid residues.

According to a particularly preferred embodiment the frying fat consists essentially of 80-100% of an olein fraction of an interesterified mixture, optionally further comprising up to 20% of liquid oil. The mixture to be interesterified can be a mixture of liquid oil and fully hardened liquid oil or it can be a mixture of these components supplemented with stearin fraction obtained from the production of a previous lot of the present frying fat. Such stearin fraction may or may not be fully hydrogenated before including it in the mixture. The mixture is then interesterified and subsequently fractionated to obtain the olein. The olein can be used as such or it can be blended with up to 20% liquid oil.

The frying fat consists essentially of fat, but it may contain minor amounts, preferably not exceeding 5%, more preferably not exceeding 3%, of additives e.g. flavour, anti-oxidant, silicone oil etc. Such additives may themselves contain some triglyceride oil or fat, but provided their amount is small, such oil or fat will not significantly affect the quality of the frying fat. Preferably the frying fat consists essentially of fat of vegetable origin.

We found that the present frying fat can be used in combination with conventional frying fat. Although in such an approach only part of the achievable nutritional benefits of the present invention are realized, we found that with respect to frying performance and sensoric quality of the fried product the present and conventional frying fat are compatible. Accordingly, the invention encompasses frying fat suitable for frying food products that are to be consumed cold, which frying fat:
* has a trans unsaturated fatty acid residence content of at most 15%.
* has a N₂₀ - N₃₅ value of at least 25.
* contains at least 50% of the present frying fat described above and up to 50% of other fat.

Also in this embodiment of the invention the N₂₀ - N₃₅ value of the total frying fat preferably is 27-50, especially 30-45; the N₂₀ preferably is 25-50, more preferably 30-47, especially 33-45 and N₃₅ preferably is 0-3, more preferably 0-2, ideally less than 1. To enlarge the nutritional benefit the amount of the present substantially trans acid free frying fat in the combined frying fat preferably is at least 70% the amount of other fat being up to 30%. The trans unsaturated fatty acid residue content of such combined frying fat preferably is no more than 10%, more preferably it is less than 7%. The other fat can e.g. be partially hydrogenated liquid oil having a slip melting point of 32-40°C, especially 34-38°C, optionally in combination with (unhydrogenated) liquid oil.

Also in this embodiment it is preferred for the content of fatty acid residues with chainlenght of 18 C to be high, as described above. Therefore, and also for taste and flavour reasons the incorporation of fat of animal origin, e.g. tallow, lard, milkfat, fish oil, is dispreferred. Also the incorporation of so-called lauric fat, e.g. coconut oil, palmkernel oil and oil derived therefrom is dispreferred, in view of the desired good frying performance and long usability of the fat as well as for nutritional reasons.

The present frying fat can be supplied in cans or bag in box or the like, but preferably the frying fat is in the form of an extruded block or sheet, e.g. packed in a wrapper. Such blocks or sheets suitably have a weight of e.g. 1.5-8 kg, especially 2-6 kg. Several such extruded blocks, which may be individually wrapped, can be packed together in an outer. This form of the product is particularly convenient for the customer to use. However, providing the product in such extruded block form is more difficult to achieve than liquid filling the product e.g. in containers or bag-in-box.

However, we found that with the present frying fat, even if it is substantially free of trans unsaturated fatty acid residues, such extruded blocks can be produced, e.g. using a Votator® line with a resting tube and an extrusion mouth at the end of the line and a stirred crystallizer in between the chilling units. Thus, the line sequence can be A-C-A-B wherein A indicates one or more scraped surface heat exchangers, C indicates one or more stirred crystallizers and B indicates a resting tube with an extrusion mouth. The extruded blocks can be packed with a suitable packing machine or manually. We believe that the relative ease with which the present frying fat can be produced in the form of extruded blocks or sheets, considering that the fat contains little or no trans acids, relates to the high S₂O content and the high difference between N₂₀ and N₃₅ of the frying fat. In particular for good processability we found it beneficial to choose the SSO/SOS ratio larger than 0.5. More preferably the SSO/SOS ratio of the frying fat is 0.7-5, especially 1-4.

The frying fat can be prepared in several ways, e.g. by combining fat components that together provide the desired triglyceride and fatty acid residue composition. Preferably however the frying fat is produced using the present process. According to this process an interesterified mixture is prepared that contains at most 30% S₃ triglycerides and at least 15% S₂O triglycerides. Since the resulting frying fat should be substantially free of trans unsaturated fatty acid residues, this also applies for the fats included in the mixture to be interesterified. The mixture includes at least liquid oil and fully hardened liquid oil. By liquid oil is meant vegetable oil that contains less than 35%, preferably less than 30% saturated fatty acids and that does not contain solid fat at 20°C, preferably at 15°C. Preferred liquid oils are groundnut oil, and high oleic acid residue containing varieties of seed and bean oils such as soybean, sunflower, rapeseed and linseed oils and combinations of two or more of such oils.

Other oils can be used in or as liquid oil as well, e.g. olive oil, cottonseed oil, soybean oil, sunflower oil, etc, but care should be taken to obtain the above described desirable properties of the interesterified mixture and of the resulting frying fat. Preferably the source of oil used for the liquid oil and for the fully hardened liquid oil is the same. It is further preferred that a single source of oil is used for this purpose, groundnut oil being the most preferred. By fully hardened liquid oil is meant liquid oil that has been hydrogenated to substantially completely remove the double bonds. The iodine value of the fully hardened liquid oil preferably is less than 10, more preferably 0-5, especially 0-3.

The amount of liquid oil and fully hardened liquid oil to be used to obtain the desired S₃ and S₂O contents in the interesterified mixture depends on the type of oil used and even for a particular type of oil may have to be slightly adapted in view of batch to batch variations. For example when using groundnut oil and fully hardened groundnut oil in the blend to be interesterified, good results will usually be obtained when using a mixture of 45-55% of the liquid oil the balance consisting of the fully hardened groundnut oil.

The interesterification can be a chemical interesterification, causing a randomisation of the fatty acid distribution over the 3 positions of the glycerol moieties, or it can be an enzymatically catalysed interesterification, e.g. using a 1,3 specific lipase. Such interesterification reactions are well known in the art. Since in the present process the type of interesterification employed has little effect on the rest of the process or the perceivable properties of the end product, the use of enzymatic interesterification is preferred since it is the milder, more natural process.

Preferably the interesterified mixture comprises 10-27% S₃ triglycerides, more preferably 15-25% S₃ triglycerides. The interesterified mixture comprises preferably 18-40% S₂O triglycerides, more preferably 20-35% S₂O triglycerides.

The interesterified mixture is then fractionated to separate it into an olein fraction, the lower melting fraction, and a stearin fraction, the higher melting fraction. Preferably the fractionation is done by means of dry fractionation in particular single-stage dry fractionation meaning that only a singly dry fractionation step is applied. The yield of olein should be at least 45% of the fractionation feedstock. Preferably the fractionation is carried out such that the olein yield is 50-70%. Suitable separation temperatures are e.g. in the range of 32-39°C, in case of single stage dry fractionation.

The olein can then be used as the frying fat or, depending on the properties of the olein it can be blended with up to 20% of liquid oil to obtain the frying fat. If for example the raw material used, the ratio used in the mixture to be interesterified and/or the way the fractionation is carried out are such that the resulting olein contains substantially more than the required amount of S₂O triglycerides and the N₂₀-N₃₅ is larger than necessary, it can for cost reasons be attractive to include some liquid oil. Such a design is also attractive for quality control reasons. If e.g. for a typical process the design is made such that 10% liquid oil is included, then for subsequent productions from different batches of raw material oil, small fluctuations in resulting olein properties can be compensated for by adapting the amount of liquid oil incorporated in the frying fat.

The stearin fraction obtained in the fractionation as a byproduct can be used for other purposes. However, it is very suitable to be incorporated in the mixture to be interesterified in the present process. The stearin fraction or part of it, can be incorporated as such or it can first by fully hydrogenated. The amount of liquid oil and fully hardened liquid oil used in the mixture to be interesterified is then adapted accordingly. For example, when applying full recirculation of the stearin obtained without hardening it, in a process starting from a 50/50 mixture of groundnut oil and fully hardened groundnut oil, with an olein yield in the dry fractionation of 60%, we found that after some cycles a steady state was obtained in which to produce 100 parts olein, the mixture to be interesterified contained 67 parts recycled stearin, 62 parts groundnut oil and 38 parts fully hardened groundnut oil.

Preferably, we found, the interesterified mixture and consequently also the mixture to be interesterified, comprises at least 50% saturated fatty acid residues and 15-50% oleic acid residues, more preferably 53-70%, especially 55-63% saturated fatty acid residues and 17-45%, especially 19-35% oleic acid residues. This can be achieved by adjusting the type and amount of components incorporated in the mixture to be interesterified, accordingly.

Throughout this specification, all parts, percentages and proportions relate to weight unless otherwise indicated. Amounts of fatty acid residues of fat are expressed with respect to the weight of the combined fatty acid residues of that fat, i.e. without taking into account the weight contribution of the glycerol moieties and minor non-glyceride constituents. The fatty acid residue composition of a fat can be determined by converting the fat to fatty acid methyl esters and measuring the composition of this FAME mixture with GLC, e.g. as described in EP78568. By substantially free of trans unsaturated fatty acid residues is meant that the content of trans unsaturated fatty acid residues is 0-3%, preferably 0-2%. The content of trans unsaturated fatty acid residues can be measured as described in JAOCS 73(3), (1996), 275-282.

The terms oil and fat are used interchangeably. Nt indicates the N-value at t °C as measured by NMR as described in Fette, Seifen, Anstrichmittel, 80, (1978), 180-186. It is a measure for the solid fat content of a fat at temperature t. The stabilisation regime applied is heating to 80°C, keeping 10 minutes at 60°C, 16 hours at 0°C and then 30 minutes at the measuring temperature.

The notation X₃ is used to indicate triglycerides having 3 X fatty acids. X₂Y and YX₂ indicate triglycerides having 2 X fatty acid and 1 Y fatty acid residues irrespective of the way in which the 3 fatty acid residues are distributed over the 3 positions of the glycerol moiety. The notations XYZ, XYX and XYY indicate triglycerides having the given fatty acid composition and having a Y fatty acid esterified to the 2 position of the glycerol moiety irrespective of which of the 2 remaining fatty acid residues occupies the 1 position and which the 3 position. Thus, in this specification the distinction between the 1 and 3 positions is not relevant. The triglyceride composition of a fat can be assessed using its fatty acid composition possibly in combination with carton number analysis (see EP 78568), silver phase HPLC (JAOCS (1991), 68(5), 289-293), silverphase TLC (F.D. Gunstone et al. The Lipid Handbook, 2nd Ed., (1994), Chapman & Hall, London, 337-340) and/or 2-position analysis (A.O.C.S. Official Method Ch 3-91, 1-4), together with knowledge of the raw materials employed and the modification techniques applied. For example, when using as raw materials oils from vegetable origin (other than lauric fats such as coconut or palmkernel oil), for practical purposes and irrespective of modification techniques employed, the 1,3 random hypothesis applies (M.H. Coleman and W.C. Fulton, 5th Int. Conf. Biochem.

Problems of Lipids, Pergamon Press, London (1961)). This means that the fatty acid residues of the 1 and 3 positions are randomly distributed between the 1 and 3 positions. If no fractionation is applied this 1,3 random hypothesis can be combined with the 2-random hypothesis meaning that the fatty acid residues occupying the 2-position are randomly distributed over the 2-positions present in the fat, independent of the fatty acid residue distribution on the 1 and 3 positions. For example, the triglyceride composition of a chemically interesterified, not fractionated fat can be calculated from the fatty acid composition based on the random distribution of the fatty acid residues. The triglyceride composition of a 1,3 specific enzymatically completely interesterified, not fractionated fat can be calculated from the overall and 2-position fatty acid compositions using the 1,3 random, 2 random approximations. Descriptions of refining and modification (interesterification, hydrogenation, fractionation) and of processing a fat composition to obtain an extruded block can be found in many textbooks, e.g. G. Hoffmann, The Chemistry and Technology of Edible Oils and Fats and their High Fat Products, Academic Press London, 1989, chapters 4, 5 and 6, respectively.

Fried foods to be consumed e.g. at ambient temperature, prepared with the present frying fat can have the desirable properties of not having an oily surface, being free from solidified fat on the surface as far as perceivable with the naked eye and containing fat that melts at or below body temperature. To our surprise we found that with the present frying fat compared to conventional frying fat used for such purposes, even improved results with respect to foaming, smell and flavour and colour of the fried product can be obtained. In addition the fried foods are nutritionally more attractive than the corresponding products made with prior art frying fat in that they are substantially free of trans unsaturated fatty acid residues, while the fatty acid composition can comprise relatively high amounts of cis unsaturated fatty acid residues, at least to the extent that the fat contained in the fried food product is absorbed frying fat. Usually, in fried food products consumed cold the major part of the fat contained in the food product is fat absorbed from the frying fat.

Accordingly the invention encompasses a process for preparing fried food product comprising frying edible material in a frying fat at a temperature of at least e.g. 150-210°C, preferably 170-190°C, wherein as frying fat a frying fat according to the present invention is used, and cooling the fried product to a temperature below 35°C. The invention specifically also encompasses fried food products obtained by this frying process, that at 20°C do not have an oily surface, that are free from solidified fat on the surface as far as perceivable with the naked eye and that comprise fat that melts at or below 37°C. The fried food product may, if so desired, be sprayed with sugar, be provided with jam, etc, before consumption.

### Example 1

Groundnut oil was hydrogenated in a conventional manner to an iodine value of 1. 50 parts of this hydrogenated fat and 50 parts of groundnut oil were mixed and chemically interesterified. The resulting product was fractionated in a single stage dry fractionation process. The separation temperature was about 37°C. The olein yield obtained was 60%. Analytical data of the groundnut oil starting material, the interesterified mixture and the resulting olein are given in table 1. The triglyceride composition was determined by means of AgNO3 HPLC. No trans fatty acid residues were detectable in the olein.

**Table 1**

| Fatty acid composition (wt%) | Groundnut oil | Interesterified mixture |
|---|---|---|
| C16 | 9.4 | 9.5 |
| C18 | 2.5 | 42.3 |
| C18:1 | 40.2 | 20.1 |
| C18:2 | 39.5 | 19.8 |
| C20 | 1.1 | 2.0 |
| C20:1 | 1.8 | 0.9 |
| Other | 5.5 | 5.4 |

| Triglyceride composition | Interesterified mixture | Olein fraction |
|---|---|---|
| S₃ | 24.1 | 3.0 |
| SOS | 7.2 | 11.0 |
| SSO | 14.6 | 17.1 |
| S₂L* | 20.7 | 26.3 |
| SO₂ | 6.4 | 8.6 |
| SLO, SOL, OSL* | 12.7 | 16.9 |
| O₃ | 0.8 | 0.9 |
| Other | 13.5 | 17.2 |

| N-values | Olein | |
|---|---|---|
| N10 | 58.1 | |
| N20 | 33.7 | |
| N30 | 4.1 | |
| N35 | 1.1 | |
| N20 - N₃₅ | 32.6 | |

| | | |
|---|---|---|
| _{*} L indicates linoleic acid | | |

The olein was refined in conventional manner. The olein was heated to 60°C and then passed through a Votator line with A-C-A-B sequence. A indicates a scraped surface heat exchanger, C indicates a stirred crystallizer and B indicates a resting tube. The end of the B-unit was provided with a rectangular extrusion mouth.

Product was extruded from it and cut with a hot wire such that blocks of 2.5 kg were obtained. They were packed in wrappers and the product was stored at 15°C.

After 1 week storage the product was evaluated as frying fat for the frying of donuts. Donut dough was prepared and the frying was carried out in conventional manner. In parallel donuts were fried in groundnut oil hydrogenated to 35°C. The donuts were allowed to cool down, frosted with sugar and evaluated blind by an experienced panel 6 hours after frying. Both samples were judged to be very good.

The fatty acid composition of the frying fat according to the invention and of the reference fat are given in Table 2.

**Table 2**

| Fatty acid composition | | |
|---|---|---|
| | Example 1 | Reference |
| C16 | 9.1 | 9.8 |
| C18 | 35.5 | 9.2 |
| C18:1 | 24.4 | 64.7 |
| C18:2 | 24.1 | 8.3 |
| C20 | 1.6 | 1.8 |
| C20:1 | 1.0 | 1.2 |
| C22 | 2.4 | 2.6 |
| C24 | 1.2 | 1.3 |
| Other | 0.7 | 1.1 |
| | | |
| Trans | < 1 % | 40% |
| Cis unsaturated | 49.5 % | 35% |

### Example 2

A frying fat was prepared as described in example 1 except that a different lot of groundnut oil was used. The olein obtained could be processed to obtain the frying fat in the form of an extruded block using a ACAAB Votator sequence. "Oliebollen" and "appelflappen" produced with the frying fat, cooled down to 20°C and sprayed with powder sugar, were found to be very good. Results of analyses are given in Table 3.

**Table 3**

| Fatty acid composition | | | |
|---|---|---|---|
| | Groundnut oil | Interesterified mixture | Olein |
| C16 | 10.5 | 10.6 | 9.6 |
| C18 | 2.9 | 42.9 | 35.5 |
| C18:1 | 57.2 | 28.7 | 35.6 |
| C18:2 | 23.2 | 11.6 | 14.3 |
| C20 | 1.4 | 2.0 | 1.5 |
| C20:1 | 1.3 | 0.6 | 0.7 |
| Other | 3.5 | 3.6 | 2.8 |
| | | | |
| Trans | - | < 1 % | < 1 % |

| Triglyceride composition | | | |
|---|---|---|---|
| | Interesterified mixture | Olein | |
| S₃ | 24.0 | 1.9 | |
| SOS | 11.6 | 14.5 | |
| SSO | 21.2 | 26.3 | |
| S₂L | 11.7 | 14.7 | |
| SO₂ | 14.1 | 19.4 | |
| Other | 17.4 | 23.2 | |

| N-values | Olein | | |
|---|---|---|---|
| N10 | 67.6 | | |
| N20 | 43.4 | | |
| N30 | 4.3 | | |
| N35 | 0.0 | | |
| N20-N35 | 43.4 | | |

### Example 3

Example 2 was repeated except that in the mixture to be interesterified, half of the fully hardened groundnut oil was replaced with stearin as obtained in the fractionation of example 2 which stearin had been hydrogenated to an iodine value of less than 2. Very similar results were obtained.

### Example 4

A frying fat is prepared from a mixture of 85% of the olein of example 2 and 15% groundnut oil.

## Claims

1. Frying fat suitable for frying food products that are to be consumed cold, which frying fat
* is substantially free of trans unsaturated fatty acid residues
* includes 0-6%, preferably 0-5%, more preferably 1-4% S3 triglycerides wherein S indicates saturated fatty acid residues
* includes at least 20% S₂O triglycerides wherein O indicates oleic acid residue
* has a N₂₀-N₃₅ value of at least 25.

2. Frying fat according to claim 1, wherein the fat comprises S0S and SS0-triglycerides in a weight-ratio <10, most preferably <1.0

3. Frying fat, according to claims 1 or 2, wherein the fat has a C18:0 - content of >35 wt%, preferably >50 wt%.

4. Frying fat according to claims 1-3 having a N₂₀ value of 25-50 and a N₃₅ value of 0-3.

5. Frying fat according to claims 1-4 that contains at least 75% fatty acid residues with a chain length of 18 carbon atoms.

6. Frying fat according to any one of claims 1-5 that includes unsaturated fatty acid residues at least 40% of which are oleic acid residues.

7. Frying fat according to any one of claims 1-6 that includes 0-4% unsaturated fatty acid residues having 3 or more double bonds.

8. Frying fat according to any one of claims 1-7 that consists essentially of
80-100% of an olein fraction of an interesterified mixture of
- liquid oil,
- fully hardened liquid oil, and
- optionally a stearin fraction of an interesterified mixture derived from liquid oil, which fraction may have been fully hydrogenated, and
0-20% liquid oil.

9. Frying fat suitable for frying food products that are to be consumed cold, which frying fat
* has a trans unsaturated fatty acid residue content of at most 15%, preferably at most 10%
* has a N₂₀-N₃₅ value of at least 25
* contains at least 50%, preferably at least 70% of frying fat according to any one of claims 1-8 and up to 50% preferably up to 30% of other fat.

10. Process for preparing a frying fat according to- any one of claims 1-8 comprising
* preparing an interesterified mixture of
- liquid oil
- fully hardened liquid oil, and
- optionally a stearin fraction of an interesterified mixture derived from liquid oil, which fraction may have been fully hydrogenated,
such that the interesterified mixture
- is substantially free of trans unsaturated fatty acid residues,
- contains at most 30%, preferably at most 27% S3 triglycerides
- contains at least 15% S₂O triglycerides
* separating the interesterified mixture into an olein fraction and a stearin fraction such that at least 45% of olein fraction is recovered, and
* optionally blending 80-100% of the olein fraction with 0-20% of liquid oil.

11. Process according to claim 10 wherein the interesterified mixture comprises at least 50% saturated fatty acid residues and 15-50% oleic acid residues.

12. Process for preparing fried food product comprising frying edible material in a frying fat at a temperature of at least 150°C, wherein as frying fat a frying fat according to any one of claims 1-9 is used, and cooling the fried product to a temperature below 35°C.

## Patentansprüche

1. Back- und Bratfett, geeignet zum Backen und Braten von Nahrungsprodukten, die kalt konsumiert werden sollen, wobei das Back- und Bratfett
* im wesentlichen ohne trans-ungesättigte Fettsäurereste vorliegt,
* 0 bis 6%, bevorzugt 0 bis 5%, insbesondere bevorzugt 1 bis 4% S₃-Triglyceride umfaßt, worin S gesättigte Fettsäurereste bezeichnet,
* mindestens 20% S₂O-Triglyceride enthält, worin O einen Oleinsäurerest bezeichnet, und
* einen N₂₀-N₃₅-Wert von mindestens 25 aufweist.

2. Back- und Bratfett nach Anspruch 1, worin das Fett SOS-und SSO-Triglyceride in einem Gewichtsverhältnis < 10, insbesondere bevorzugt < 1,0 umfaßt.

3. Back- und Bratfett nach Anspruch 1 oder 2, worin das Fett einen C_{18:0}-Gehalt von > 35 Gew.-%, bevorzugt > 50 Gew.-% aufweist.

4. Back- und Bratfett nach Anspruch 1 bis 3 mit einem N₂₀-Wert von 25 bis 50 und einem N₃₅-wert von 0 bis 3.

5. Back- und Bratfett nach Anspruch 1 bis 4, das mindestens 75% Fettsäurereste mit einer Kettenlänge von 18 Kohlenstoffatomen enthält.

6. Back- und Bratfett nach mindestens einem der Ansprüche 1 bis 5, das ungesättigte Fettsäurereste umfaßt, von denen mindestens 40% Oleinsäurereste darstellen.

7. Back- und Bratfett nach mindestens einem der Ansprüche 1 bis 6, das 0 bis 4% ungesättigte Fettsäurereste mit 3 oder mehr Doppelbindungen umfaßt.

8. Back- und Bratfett nach mindestens einem der Ansprüche 1 bis 7, das im wesentlichen besteht aus
80 bis 100% einer Oleinfraktion einer umgeesterten Mischung aus
- flüssigem Öl,
- vollständig gehärtetem flüssigen Öl und
- gegebenenfalls einer Stearinfraktion einer umgeesterten Mischung, abgeleitet aus flüssigem Öl, dessen Fraktion vollständig hydriert sein kann und
0-20% flüssigem Öl.

9. Back- und Bratfett, geeignet zum Backen und Braten von Nahrungsprodukten, die kalt konsumiert werden sollen, wobei das Back- und Bratfett
* einen Gehalt an trans-ungesättigter Fettsäure von höchstens 15% aufweist, bevorzugt höchstens 10%,
* einen N₂₀-N₃₅-Wert von mindestens 25 aufweist und
* mindestens 50%, bevorzugt mindestens 70% des Back-und Bratfetts nach mindestens einem der Ansprüche 1 bis 8 und bis zu 50%, bevorzugt bis zu 30% eines anderen Fetts enthält.

10. Verfahren zur Herstellung eines Back- und Bratfetts nach mindestens einem der Ansprüche 1 bis 8, umfassend
* Herstellen einer umgeesterten Mischung aus
- flüssigem Öl,
- vollständig gehärtetem flüssigen Öl und
- gegegebenenfalls einer Stearinfraktion einer aus flüssigem Öl stammenden umgeesterten Mischung, dessen Fraktion vollständig hydriert sein kann,
so daß die umgeesterte Mischung
- im wesentlichen ohne trans-ungesättigte Fettsäurereste vorliegt,
- höchstens 30%, bevorzugt höchstens 27% S₃-Triglyceride enthält,
- mindestens 15% S₂O-Triglyceride enthält,
* Auftrennen der umgeesterten Mischung in eine Oleinfraktion und eine Stearinfraktion, derart, daß mindestens 45% der Oleinfraktion gewonnen werden, und
* gegebenenfalls Vermischen von 80 bis 100% der Oleinfraktion mit 0 bis 20% des flüssigen Öls.

11. Verfahren nach Anspruch 10, worin die umgeesterte Mischung mindestens 50% gesättigte Fettsäurereste und 15 bis 50% Oleinsäurereste umfaßt.

12. Verfahren zur Herstellung gebackener und gebratener Nahrungsprodukte, umfassend Backen und Braten eines verzehrbaren Materials in einem Back- und Bratfett bei einer Temperatur von mindestens 150°C, worin als Back- und Bratfett ein Back- und Bratfett nach mindestens einem der Ansprüche 1 bis 9 eingesetzt wird, sowie Abkuhlen des gebackenen und gebratenen Produkts auf eine Temperatur unter 35°C.

## Revendications

1. Matière grasse de friture appropriée pour frire des produits alimentaires destinés à être consommés froids, ladite matière grasse de friture :
• ne contenant substantiellement pas de résidus d'acide gras trans insaturés ;
• comprenant de 0 à 6 %, de préférence de 0 à 5 %, de façon plus préférentielle de 1 à 4 % de triglycérides S₃, dans lesquels S indique les résidus d'acide gras saturés ;
• comprend au moins 20 % de triglycérides S₂O dans lesquels O indique un résidu d'acide oléique ;
• a une valeur N₂₀ - N₃₅ d'au moins 25.

2. Matière grasse de friture selon la revendication 1, dans laquelle la matière grasse comprend des triglycérides SOS et des SSO dans un rapport en poids < 10, de façon plus préférentielle < 1,0.

3. Matière grasse de friture selon la revendication 1 ou 2, dans laquelle la matière grasse a une teneur en C18:1 supérieure à 35 % en poids, de préférence supérieure à 50 % en poids.

4. Matière grasse de friture selon l'une des revendications 1 à 3, ayant une valeur N₂₀ de 25 - 50 et une valeur N₃₅ de 0 - 3.

5. Matière grasse de friture selon l'une des revendications 1 à 4, qui contient au moins 75 % de résidus d'acide gras ayant une longueur de chaîne de 18 atomes de carbone.

6. Matière grasse de friture selon l'une quelconque des revendications 1 à 5, qui comprend des résidus d'acides gras insaturés dont au moins 40 % sont des résidus d'acide oléique.

7. Matière grasse de friture selon l'une quelconque des revendications 1 à 6, qui comprend de 0 à 4 % de résidus d'acides gras insaturés ayant 3 doubles liaisons ou plus.

8. Matière grasse de friture selon l'une quelconque des revendications 1 à 7, essentiellement composée de :
• 80 - 100 % d'une fraction oléine d'un mélange inter estérifié de :
- huile liquide
- huile liquide entièrement durcie, et
- optionnellement, une fraction stéarine d'un mélange inter estérifié dérivé d'huile liquide, ladite fraction pouvant avoir été entièrement hydrogénée, et
• 0 - 20 % d'huile liquide.

9. Matière grasse de friture appropriée pour frire des produits alimentaires destinés à être consommés froids, ladite matière grasse de friture :
• ayant une teneur en résidus d'acides gras trans insaturés d'au plus 15 %, de préférence d'au plus 10 %,
• ayant une valeur N₂₀ - N₃₅ d'au moins 25
• contenant au moins 50 %, de préférence au moins 70 % de matière grasse de friture selon l'une quelconque des revendications 1 à 8 et jusqu'à 50 %, de préférence jusqu'à 30 % d'autre matière grasse.

10. Procédé de préparation d'une matière grasse de friture selon l'une quelconque des revendications 1 à 8, comprenant les étapes consistant à:
• préparer un mélange inter estérifié de :
- huile liquide,
- huile liquide entièrement durcie, et
- optionnellement, une fraction stéarine d'un mélange inter estérifié dérivé d'huile liquide, ladite fraction pouvant avoir été entièrement hydrogénée,
de telle sorte que le mélange inter estérifié
- ne contienne substantiellement pas de résidus d'acides gras trans insaturés,
- contienne au plus 30 %, de préférence au plus 27 % de triglycérides S₃,
- contienne au moins 15 % de triglycérides S₂O
• séparer le mélange inter estérifié en une fraction oléine et en une fraction stéarine de telle sorte qu'au moins 45 % de la fraction oléine soit récupéré, et
• de façon optionnelle, mélangé 80 à 100 % de la fraction oléine avec de 0 à 20 % d'huile liquide.

11. Procédé selon la revendication 10, dans lequel le mélange inter estérifié comprend au moins 50 % de résidus d'acides gras saturés et de 15 à 50 % de résidus d'acide oléique.

12. Procédé de préparation d'un produit alimentaire frit comprenant les étapes consistant à faire frire un matériau comestible dans une matière grasse de friture à une température d'au moins 150°C, dans lequel on utilise en tant que matière grasse de friture une matière grasse de friture selon l'une quelconque des revendications 1 à 9, et à faire refroidir le produit frit à une température inférieure à 35°C.
